# EUROPÄISCHE PATENTANMELDUNG

(11) **EP 0 614 611 A1**
(43) Veröffentlichungstag der Anmeldung: **14.09.1994**
(21) Anmeldenummer: 93102012.7
(22) Anmeldetag: 09.02.1993
(51) Int. Cl.: A23B 9/04, A23B 9/08, A23L 3/54

(54) **Verfahren zum Aufbereiten und Konservieren von Futterstoffen und/oder feuchten Erntegütern und Vorrichtung zur Durchführung dieses Verfahrens**

(71) Anmelder: Wörle, Stefan, 87463 Dietmannsried (DE)
(72) Erfinder: Eyerle, Anton, W-8950 Kaufbeuren (DE); Vogler, Werner Fritz, W-8953 Obergünzburg (DE); Gasteiger, Anton, W-8927 Burggen (DE)
(74) Vertreter: Kern, Ralf M., Dipl.-Ing.

(57) **Zusammenfassung**

Die Erfindung besteht in einem Verfahren und einer Vorrichtung zur Aufbereitung und Konservierung von Futterstoffen und/oder Erntegütern mittels kombinierter Mikrowellen- und Lufttrocknung und umfaßt, daß
(a) das zu behandelnde Gut ggf. nach Bestimmung seiner Ausgangsfeuchte (6) einer Mikrowellenvorbehandlung (5) mit einer Energie unterzogen wird, welche zum Aufbrechen der Zelloberflächenstruktur führt und bei welcher die Zellflüssigkeit weitgehend erhalten bleibt;
(b) anschließend das vorbehandelte Gut einer Niedrigtemperatur-Lufttrocknung (8) je nach Zwischenfeuchte (11) in einem Temperaturbereich von 70 bis 110°C unterworfen wird, wobei hier der überwiegende Teil der Gutfeuchte entfernt wird und dabei
(c) eine vorbestimmte Restfeuchte des getrockneten Guts eingestellt wird und daß
(d) eine Abwärmerückgewinnung aus den Einrichtungen zur Verfahrensdurchführung und ggf. weiteren Einrichtungen zum Betreiben bzw. Vorheizen der Lufttrocknungseinrichtung durchgeführt wird.

## Beschreibung

Die Erfindung betrifft ein Verfahren zum Aufbereiten und Konservieren von Futterstoffen und/oder feuchten Erntegütern, wobei das zu behandelnde Gut einem mehrstufigen speziellen Trockungsverfahren ausgesetzt wird. Die Erfindung umfaßt weiterhin eine Vorrichtung zur Durchführung eines solchen Verfahrens.

Zur ganzjährigen Versorgung mit Futterstoffen für die Nutztiere in der Landwirtschaft ist es erforderlich, aus den Futterstoffen Winterfutter zu bereiten. Die Aufbereitung und Konservierung eines solchen Winterfutters, welches als Grüngut vorliegt, erfolgt entweder auf dem Feld in bekannter Weise oder durch eine künstliche Trocknung, um die Feuchtigkeit aus dem vorliegenden Gut, beispielsweise Halmgut, zu entfernen, um hierbei eine Schimmelbildung (Toxine) oder ein Gären (Nährstoffverluste) zu verhindern. Das Gut wird hierbei mit kalter oder vorgewärmter Luft, welche über das Gut geblasen wird, im Stapel solange getrocknet, bis es einen zur Lagerung ausreichenden niedrigen Feuchtigkeitsgehalt aufweist. Die Trocknung des Gutes im Stapel erfordert einen erheblichen Zeitaufwand, wobei nicht auszuschließen ist, daß durch zu hohe Ausgangsfeuchte bereits während des Trocknungsvorganges im Stapel Schimmelbildung auftritt, welche die Verwendung des Gutes als hochwertiges Viehfutter beeinträchtigt.

Es wurde vorgeschlagen, beispielsweise eine Frischgrastrocknung mittels Heißluft vorzunehmen, wobei das feuchte Gut Temperaturen von ca. 800 bis 1000 °C ausgesetzt wird. Die hierbei auftretenden hohen Temperaturen können zu Futterveränderungen sowie einer Senkung der Nährstoffgehalte und Verwertbarkeit und zu einem Substanzverlust durch Übertrocknung führen. Der Energiebedarf bei der Heißlufttrocknung, basierend auf fossilen Brennstoffen, ist erheblich, wobei durch die erforderlichen Wärmeerzeugungseinrichtungen zusätzliche Umweltbelastungen auftreten. Auch erweist sich als besonders nachteilig, daß das Trockengut während der Trocknung mit Heißgasen kontaminiert wird. Die bekannten Verfahren der Heißlufttrocknung schließen einen nachträglichen Einfluß auf den begonnenen Trocknungsprozeß im Sinne einer Steuerung nach der Produktaufgabe aus. Durch den Hochtemperaturtrocknungsprozeß erfolgt ein teilweise extremer Staubauswurf, welcher für den weiteren Verlust von Wirkstoffen und wesentlichen Bestandteilen des Trockengutes kennzeichnend ist.

Durch diese Verluste ist es nicht immer ohne nachträgliche Beimengung von Wasser und gegebenenfalls weiteren Substanzen möglich, eine Pelletierung des übertrockneten Gutes vorzunehmen. Bereits unter diesem Aspekt zeigt sich die außerordentlich ungünstige Energiebilanz der bekannten Heißlufttrocknung, da zunächst mit hohem Aufwand ein Wasserentzug realisiert wird, und wobei im Nachgang bei weiteran erforderlichen Behandlungsschritten bzw. Verfahren entzogenes Wasser und weitere Bestandteile wieder zugegeben werden müssen.

Aus der SU-Patentschrift 225 613 ist ein Verfahren zur Anwendung elektrischer Ladungsvorgänge in der landwirtschaftlichen Produktion bekannt. Bei dem sogenannten Klimov-Verfahren erfolgt eine Veränderung des Zustandes des zum Trocknen bestimmten Grases, indem man es elektrischen Hochspannungsentladungen aussetzt. Hierbei wurde erkannt, daß der Trocknungsprozeß durch vorhergehenden Einfluß elektrischer Entladungen auf das zu behandelnde Gut verkürzt werden kann. Im Ergebnis der Entladungsbehandlung gelangt der Zerfall organischer Verbindungen zum Stillstand, und die Unversehrtheit der im Gut enthaltenen Nährstoffe wird im Vergleich mit nicht elektrisch behandeltem Gras verbessert.

Nachteilig ist hierbei die relativ große Behandlungsdauer, insbesondere dann, wenn eine Grastrocknung großtechnisch vorgenommen werden soll, da durch die Aufgabe von relativ feuchtem Gras eine Oberflächenableitung der zugeführten Ladungen mit punktuellen Verbrennungen ohne ausreichende Wirkung auf das zu behandelnde Gut erfolgt. Problematisch ist weiterhin die erforderliche Hochspannungsisolation. Auch ist es aus arbeitsschutztechnischen Gründen schwierig, eine solche großtechnische Hochspannungsbehandlung einzurichten bzw. durchzuführen.

Aus der Offenlegungsschrift DE 32 15 722 A1 ist ein Verfahren zum Konservieren von Erntegütern, vorzugsweise von Halmgut für Nutztiere, insbesondere für Rindvieh, bei welchem das Gut getrocknet wird, vorbekannt, wobei das zu behandelnde Gut zum wenigstens teilweisen Trocknen einer hochfrequenten Strahlung ausgesetzt wird. Hierbei wird vorteilhafterweise als hochfrequente Strahlung Mikrowellenstrahlung verwendet. Dabei wird davon ausgegangen, daß mit der Mikrowellenbestrahlung die Futterstoffe bzw. Erntegüter äußerst energie- und kostensparend in kurzer Zeit getrocknet werden können. Zur Steigerung des Trocknungseffektes soll gemäß der DE 32 15 722 A1 die Strahlenbehandlung unter Vakuum durchgeführt werden, da in diesem Falle die Feuchtigkeit leichter aus dem Gut entweichen kann, so daß die Behandlungszeiten weiter verkürzbar sind.

Es wird die Behauptung aufgestellt, daß im Rahmen einer Durchlaufbehandlung mittels hochfrequenter Strahlung die Durchlaufzeit ausreichend ist, um das zu behandelnde Gut zu einem gewünschten Trocknungsgrad zu führen. Hierzu ist zunächst festzuhalten, daß zur kontinuierlichen Trocknung von Gut, beispielsweise von erntefrischem Grüngut, bei Betrachtung der Energiebilanz eine erhebliche Strahlungsleistung aufzubringen ist, wobei es nicht gelingt, in einem Durchlaufverfahren die erforderliche Energiemenge auf das Gut aufzubringen und den entstehenden Wasserdampf pro Zeiteinheit abzuführen. Es hat sich also gezeigt, daß eine ausschließliche Behandlung des Gutes mit hochfrequenter Strahlung nicht zu der gewünschten Zeit- und Energieeinsparung in Trocknungsvorgang führt.

Aus der US-PS 44 30 806 sind ein Verfahren und eine Vorrichtung zum Trocknen organischer Produkte unter Verwendung eines Mikrowellenheizers bekannt. Hierbei wird das zu behandelnde Gut mäanderförmig durch eine Mikrowellenvorrichtung geführt, wobei eine Restfeuchtigkeit des Gutes von ca. 10 % im Durchlaufverfahren erreicht werden soll. Es hat sich jedoch gezeigt, daß durch die notwendige aufzubringende Energieintensität eine Beeinflussung der Struktur bzw. der Eigenschaften des zu behandelnden Gutes in negativer Hinsicht erfolgt.

Eine ähnliche Vorrichtung wird in der US-PS 45 70 045 beschrieben, wobei hier die Mikrowellenkammer eine spezielle Struktur zur Erhöhung des Wirkungsgrades aufweist. Mit dieser Struktur soll eine effektivere Strahlungseinwirkung auf das zu behandelnde Gut, beispielsweise landwirtschaftliche Produkte, mit gleichzeitiger Verkürzung der Durchlaufzeit selbiger durch die Vorrichtung gegeben sein. Auch hier ist ein Trocknungsgrad in der Größenordnung von 10 bis 15 % Endwassergehalt im zu behandelnden Gut nur unter Inkaufnahme verringerter Wertigkeit der zu behandelnden Produkte möglich.

Allen vorangegangenen Lösungen ist gemeinsam, daß die in ihnen offenbarten Prinzipien entweder eine Trocknung auf einen vorgegebenen minimalen Endwert nur mit großem technischen Aufwand bzw. einer langen Verfahrensdauer erreichen, oder daß in Falle des intensiven Einwirkens von Energie zur Erreichung des Ziel-Trocknungsgrades erhebliche Nähr- und Wirkstoffverluste der zu behandelnden Güter zu verzeichnen sind.

Der Erfindung liegt daher die Aufgabe zugrunde, ein Verfahren zum Aufbereiten und Konservieren von Futterstoffen und/oder feuchten Erntegütern anzugeben, welches es ermöglicht, unter minimalem Energieeinsatz eine Futterstoffbehandlung derart durchzuführen, daß eine Erhaltung der Nähr- und Wirkstoffe im Behandlungsgut gegeben ist. Aufgabe der Erfindung ist weiterhin die Erreichung des Ziel-Feuchtigkeitsgehaltes in kürzester Zeit und mit minimalem Gesamtenergieeinsatz, unabhängig von Schwankungen der Ausgangsfeuchte des aufgegebenen zu behandelnden Gutes.

Die Aufgabe der Erfindung wird mit einem Verfahren gemäß den Ansprüchen 1 bis 6 sowie erfindungsgemäß mit der in den Ansprüchen 7 bis 10 dargelegten Vorrichtung gelöst.

Erfindungsgemäß wird die Erkenntnis berücksichtigt, daß in bekannten fossilen Heißlufttrocknungsverfahren das auszutreibende Wasser unter Wärmeeinwirkung gegen den Partialdruck der Zelle des zu behandelnden Gutes einwirken, d.h. diesen überwinden muß. Auch bei Anwendung der Mikrowellentrocknungstechnologie muß der entstehende Wasserdampf die Zellstruktur durchdringen, welches eine explosionsartige Zerstörung der Zellen des zu behandelnden Gutes mit allen resultierenden Nachteilen zur Folge hat. Überraschenderweise hat sich gezeigt, daß durch eine kurzzeitige Vorbehandlung des aufgegebenen Gutes mit Mikrowellenstrahlung relativ geringer Energie bei Behandlungstemperaturen in einen Bereich unter 90 °C ein gezieltes Aufbrechen der Zellstruktur unter Vermeidung nachteiliger Einflüsse auf die innerhalb des zu behandelnden Gutes befindlichen Nähr- und Wirkstoffe möglich ist. Die Zellflüssigkeit einschließlich gelöster Nähr- und Wirkstoffe bleibt im Durchlauf der Mikrowellenbehandlung weitgehend erhalten.

In einer zweiten Behandlungsstufe wird der eigentliche, energiesparende und schonende Trocknungsprozeß durchgeführt. Dieser Trocknungsprozeß wird mittels Lufttrocknung in einem Temperaturbereich von ca. 70 bis 110 °C verwirklicht. Nach der Ausgabe des Trocknungsgutes erfolgt eine definierte vorbestimmte Kühlung des behandelten Gutes.

Das erfindungsgemäße Verfahren gestaltet sich demnach wie folgt.

Nach der Aufgabe des zu behandelnden Gutes erfolgt ein Auflockern desselben. Anschließend wird mit einem ersten Feuchtesensor die Ausgangsfeuchte des Gutes bestimmt. Das Gut gelangt hiernach im Durchlaufverfahren zur Mikrowellenbehandlung in einem Temperaturbereich von < 90° und relativ geringer, vorgegebener Energie. Nach erfolgter Mikrowellenbehandlung erfolgt eine zweite Feuchtigkeitsmessung mittels eines zweiten Feuchtigkeitssensors. Nunmehr gelangt das so vorbehandelte Gut in einen Mehrband-Lufttrockenofen und wird dort einer gesteuerten Temperaturbehandlung in einem Bereich von ca. 70 bis 110 °C unterzogen. Trocknerausgangsseitig wird die Restfeuchte mittels eines dritten Feuchtesensors bestimmt. Abschließend erfolgt eine definierte Kühlung des getrockneten Gutes.

Das Verfahren ist so ausgebildet, daß die Abwärme der Mikrowellenvorrichtung sowie gegebenenfalls die eines Stromerzeugungsgenerators zum Betreiben der Gesamtanlage dem Lufttrockner zugeführt werden kann. Auch die in der Abluft des Trockners enthaltene Wärmeenergie sowie die sich bei der Abkühlung des Gutes erwärmende Kühlluft wird dem Trockner wieder zugeführt.

Mittels der Anordnung der Feuchtigkeitssensoren ist eine optimale Steuerung des gesamten Behandlungsverfahrens, insbesondere des Luftdurchsatzes, der Wasseraustragsfähigkeit und der Auflagehöhe des Gutes auf den Bändern des Trockners möglich.

Überraschenderweise hat sich gezeigt, daß durch den definierten Feuchteentzug bei schonender Behandlung des Gutes und anschließender vorbestimmter Kühlung der Mikroorganismenbesatz bedeutend niedriger und die mikrobiologisch-hygienische Beschaffenheit des zu behandelnden Gutes weit unter den allgemeinen Richtwerten für die Unbedenklichkeit liegt. Die Verbindung einer Niedrigenergie-Niedrigtemperatur-Mikrowellenbehandlung mit einer Niedrigtemperatur-Lufttrocknung und einer Bestimmung des Feuchtegehaltes vor und nach den einzelnen Verfahrensschritten bzw. Verfahrensstufen führt zu einem Trocknungsprodukt, welches Grünfutter-ähnliche Eigenschaften aufweist. So ist beispielsweise nach dem erfindungsgemäßen Verfahren getrocknetes hochwertiges Gras, insbesondere hinsichtlich des Energiegehaltes wie das Ausgangsprodukt einzustufen.

Durch die Niedrigtemperatur-Lufttrocknung erfolgt nur eine unwesentliche Umweltbelastung, wobei gleichzeitig die Kontamination des Trocknungsgutes durch Heizgase vermieden wird. Durch die spezielle Verfahrensgestaltung im Zusammenhang mit der Bestimmung des Feuchtigkeitsgrades je Verfahrensschritt ist der Produktionsprozeß und damit die Produktqualität kontinuierlich steuerbar, d.h. es kann in kürzester Zeit auf die einzelnen Parameter dahingehend Einfluß genommen werden, daß die Qualität des Endproduktes gewährleistet wird sowie eine hohe Betriebssicherheit und Wirtschaftlichkeit der erfindungsgemäßen Vorrichtung gegeben ist. Ohne konstruktive oder prinzipielle verfahrensseitige Änderungen vornehmen zu müssen, ist die Behandlung von unterschiedlichsten Gütern, beispielsweise verschiedenartiger Grassorten, möglich. Gleichzeitig kann nach dem erfindungsgemäßen Verfahren Langheu verarbeitet werden, welches bekanntermaßen ein vitamin-, mineral- und nährstoffreiches natürliches Winterfutter darstellt. Durch die Langheu-Verarbeitung bzw. -Erzeugung erübrigt sich die ansonsten aufwendige und problematische Silagebereitung in Flachsilos in der Landwirtschaft.

Durch den relativ geringen Feuchtigkeitsaustrag in der Mikrowelleneinrichtung, welcher nur unwesentlich zur eigentlichen Trocknung beiträgt, bleiben die verschiedensten Wirk- und Aromastoffe im Trocknungsgut erhalten. Ein im Anschluß gegebenenfalls zweckmäßiges Verpressen des Trockengutes mit definierter Endfeuchte kann in einfacher Weise realisiert werden. Durch die schonende Verfahrensweise ergibt sich weiterhin ein hoher Energie-, Eiweiß- und Karotinerhalt und damit eine Erhaltung der intensiven Grasfarbe.

Durch den gewählten erfindungsgemäßen Verfahrensablauf in Verbindung mit der Sensoranordnung ergibt sich die Möglichkeit einer individuellen Steuerung der Bänder in der Lufttrocknungseinrichtung in Abhängigkeit vom vorliegenden Behandlungsgut. Bei konstanter Zugabemenge des Behandlungsgutes, beispielsweise Gras, wird über die Steuerung der Bandgeschwindigkeit die Höhe des Grasteppichs auf dem Band vorbestimmt. Durch in vorteilhafter Weise durchgeführte Bestimmung der Abluftfeuchte ist eine maximale Belegung der Trockenluft mit Feuchte und damit eine günstige Energiebilanz gegeben. Durch eine zweckmäßigerweise vorgesehene Verzögerung der Bandgeschwindigkeit der einzelnen in Stapelanordnung vorgesehenen Bänder innerhalb der Lufttrocknungseinrichtung wird das Trockengut auf dem Band gewendet, so daß eine effektivere und intensivere Einwirkung der Trockenluft auf das Behandlungsgut möglich ist.

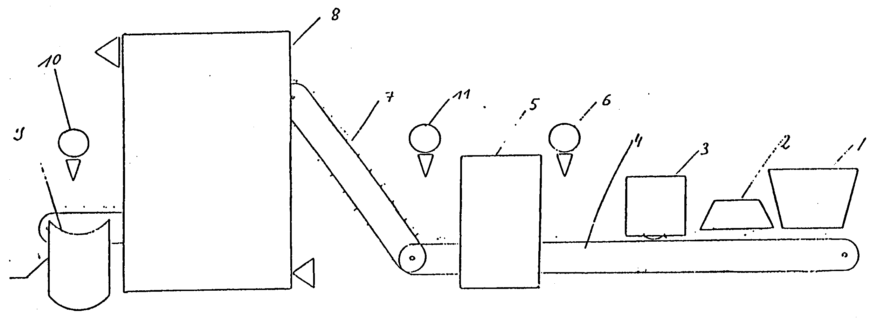

Die Erfindung soll anhand einer Figur sowie eines Beispiels näher erläutert werden. Die Figur zeigt hierbei den prinzipiellen Aufbau einer erfindungsgemäßen Vorrichtung zur Durchführung des Verfahrens zur Aufbereitung und Konservierung von Futterstoffen und/oder feuchten Erntegütern.

Die gezeigte Vorrichtung dient im vorliegenden Beispiel zur kontinuierlichen Trocknung von erntefrischen Grüngut, beispielsweise Gras. Diese Vorrichtung enthält eine Aufgabeeinrichtung 1, welcher ein Fremdkörperabscheider 2 nachgeordnet ist. Mittels der Vorrichtung 3 erfolgt ein Auflockern des aufgegebenen Gutes. Über eine Bandfördereinrichtung 4 gelangt das zu behandelnde Gut in die Mikrowellenbehandlungseinrichtung 5. Die Ausgangsfeuchte des zu behandelnden Gutes wird mittels des ersten Feuchtesensors 6, welcher zwischen der Aufgabeeinrichtung 1 und der Mikrowellenbehandlungseinrichtung 5 angeordnet ist, ermittelt. Beispielsweise besitzt das aufgegebene Gut eine Ausgangsfeuchte von 86 %. Nach der Mikrowellenbehandlung in der Vorrichtung 5, welche bei Temperaturen von ca. 70 bis 90 °C im Durchlaufverfahren ausgeführt wird, besitzt das vorbehandelte Gut eine Feuchte von ca. 74 % im Falle der vorstehend erwähnten Ausgangsfeuchte von 86 %. Der Betrag der Feuchtereduzierung mittels der Mikrowelleneinrichtung 5 ist im Verhältnis zur Zielfeuchte außerordentlich gering, da es primäre Aufgabe der Mikrowellenvorrichtung 5 ist, ein definiertes Aufbrechen der Zellstruktur zur nachfolgenden effektiven Lufttrocknung unter Beibehaltung des Wirkstoffgehaltes zu erreichen. Ausgangsseitig ist der Mikrowellenvorrichtung 5 ein zweiter Feuchtigkeitssensor 11 nachgeordnet. Das zu behandelnde Gut gelangt nunmehr gegebenenfalls über ein Transportband bzw. eine Transporteinrichtung 7 in die Lufttrocknungseinrichtung 8. Beispielsweise wird das zu behandelnde Gut von oben in die Lufttrocknungseinrichtung 8 eingebracht, wobei die Einrichtung 8 mehrere, beispielsweise drei übereinander angeordnete Bänder aufweist und die Trocknungswarmluft von unten nach oben die Einrichtung 8 durchströmt. Die Lufttrocknungseinrichtung 8 ist derart ausgebildet, daß jedes der vorhandenen Bänder in seiner Geschwindigkeit individuell beeinflußbar ist. Durch diese individuelle Geschwindigkeitssteuerung kann, wie bereits erwähnt, der Behandlungsteppich auf dem Band in Abhängigkeit von der Eingangsfeuchte des Materials sowie dessen speziellen Eigenschaften eingestellt werden. Vorteilhafterweise ist die Geschwindigkeit des oberen Bandes höher als das der unteren Bänder. Durch ein definiertes gegeneinander erfolgendes Verzögern der Geschwindigkeit der einzelnen Bänder ist eine weitere Auflockerung bzw. ein Wenden des vom zu behandelnden Gut gebildeten Teppichs durchführbar. Trocknerausgangsseitig erfolgt das definierte Kühlen des Behandlungsgutes auf eine vorgegebene Temperatur mittels der Kühleinrichtung 9.

Ein hier angeordneter dritter Feuchtigkeitssensor 10 kontrolliert die Einhaltung der Ziel-Restfeuchte von vorteilhafterweise 14 bis 15 % Wassergehalt.

Durch den vorgebbaren Ziel-Restwassergehalt ist ein gegebenenfalls erforderlich werdendes Verpressen der erhaltenen Produkte in einfacher Weise ohne ansonsten erforderliche nachträgliche Wasserzugabe möglich. Der derart behandelte Futterstoff ist pilzfrei und außerordentlich nähr-und wirkstoffreich, so daß dessen Verwendung als vollwertiger Grünfutterersatz erfolgen kann. Ein weiterer Vorteil der Erfindung zeigt sich darin, daß ohne die spezielle Mikrowellenvorbehandlung zum Aufbrechen der Zellstrukturen zur Erreichung eines gleichwertigen Trocknungsprozesses pro Menge- und Zeiteinheit ein Trockner mit Trocknungstemperaturen zwischen 800 und 900 °C vorgesehen werden müßte. Es ist ersichtlich, daß bei diesen Temperaturen eine starke negative Beeinflussung der Nähr- und Wirkstoffe, insbesondere des Proteins sowie des Karotins, gegeben ist.

Es bleibt also festzuhalten, daß es mittels der Erfindung in überraschender Weise gelungen ist, durch den Einsatz einer Mikrowellenvorbehandlung eine Trocknung mit minimalem Energieaufwand im Niedrigtemperaturbereich innerhalb kürzester Zeit durchzuführen.

Hierbei wurde entgegen den vorliegenden bekannten Erkenntnissen nicht primär auf eine Vor- bzw. gänzliche Trocknung mittels Mikrowelle abgestellt, sondern es wurde durch eine begrenzte Mikrowellenenergiezufuhr eine definierte Einwirkung auf die zu behandelnden pflanzlichen Zellen dergestalt erreicht, daß schädigende Einflüsse nicht auftreten, gleichzeitig aber im nachfolgenden Niedrigtemperatur-Lufttrocknungsprozeß ein leichtes Austreten und Abführen der in den Zellen enthaltenen Feuchtebestandteile möglich ist.

Durch eine optimale Prozeßführung sowie den Aufbau der erfindungsgemäßen Vorrichtung unter Beachtung der Vermeidung von Wärmeverluston bzw. einer nahezu vollständigen Wärmerückgewinnung ist die Trocknung, mitbezogen auf die zu trocknende Menge und deren Eigenschaften, mit minimalster äußerer Energiezufuhr erreichbar.

Die Erfindung nutzt also zusammenfassend die erfindungsgemäße Erkenntnis, daß mittels der Beaufschlagung von Mikrowellenenergie in den Aufbau bzw. in die biologisch-chemischen Vorgänge der zu behandelnden pflanzlichen Güter derart eingegriffen werden kann, daß die natürlichen Funktionen der Zellen und deren Strukturen aufgehoben werden. Durch die derart mögliche sofortige Verarbeitung des beispielsweise Frischgrases ist die Erhaltung der Gesamtheit aller gewachsenen Nähr-, Wirk- und Aromastoffe möglich.

## Patentansprüche

1. Verfahren zur Aufbereitung und Konservierung von Futterstoffen und/oder Erntegütern mittels kombinierter Mikrowellen- und Lufttrocknung, dadurch **gekennzeichnet,** daß
(a) das zu behandelnde Gut ggf. nach Bestimmung seiner Ausgangsfeuchte einer Mikrowellenvorbehandlung mit einer Energie unterzogen wird, welche zum Aufbrechen der Zelloberflächenstruktur führt und bei welcher die Zellflüssigkeit weitgehend erhalten bleibt;
(b) anschließend das vorbehandelte Gut einer Niedrigtemperatur-Lufttrocknung je nach Zwischenfeuchte in einem Temperaturbereich von 70 bis 110°C unterworfen wird, wobei hier der überwiegende Teil der Gutfeuchte entfernt wird und dabei
(c) eine vorbestimmte Restfeuchte des getrockneten Guts eingestellt wird und daß
(d) eine Abwärmerückgewinnung aus den Einrichtungen zur Verfahrensdurchführung und ggf. weiteren Einrichtungen zum Betreiben bzw. Vorheizen der Lufttrocknungseinrichtung durchgeführt wird.

2. Verfahren nach Anspruch 1, dadurch **gekennzeichnet,** daß das getrocknete Gut einer definierten Nachkühlung unterzogen wird.

3. Verfahren nach Anspruch 1 oder 2, dadurch **gekennzeichnet,** daß die Mikrowellenbehandlung bei einer Temperatur von 70 bis 90°C durchgeführt wird.

4. Verfahren nach einem der Ansprüche 1 bis 3, dadurch **gekennzeichnet,** daß die Mikrowellenenergiebehandlung durch die Steuerung der Durchlaufgeschwindigkeit in ihrer Einwirkung begrenzt wird.

5. Verfahren nach einem der Ansprüche 1 bis 4, dadurch **gekennzeichnet,** daß Prozeßparameter zur Einstellung einer Ziel-Restfeuchte aus der Mikrowellenbehandlungs- bzw. Einwirkungszeit, der Verweilzeit des Gutes in der Lufttrocknungseinrichtung und der vorbestimmten Ziel-Ausgangsfeuchtewerte verwendet werden.

6. Verfahren nach einem der Ansprüche 1 bis 5, dadurch **gekennzeichnet,** daß als Feuchtigkeitssensoren im nahen Infrarotbereich empfindliche Strahlungsempfänger verwendet werden.

7. Vorrichtung zur Durchführung des Verfahrens nach den Ansprüchen 1 bis 6, enthaltend eine Aufgabeeinrichtung sowie einen Fremdkörperabscheider (2), dadurch **gekennzeichnet,** daß die Vorrichtung einen ersten Feuchtesensor (6) enthält, welcher die Grüngut-Ausgangsfeuchte bestimmt, und der einer Mikrowellenvorbehandlungseinrichtung (5) vorgeordnet ist und das vorbehandelte Gut in eine Band-Lufttrocknungseinrichtung (8), welche der Mikrowellenvorbehandlungseinrichtung (5) nachgeordnet ist, gelangt.

8. Vorrichtung nach Anspruch 6, dadurch **gekennzeichnet,** daß die Band-Lufttrocknungseinrichtung (8) ausgangsseitig eine Kühleinrichtung (9) aufweist.

9. Vorrichtung nach einem der Ansprüche 6 und 7, dadurch **gekennzeichnet,** daß ein Feuchtigkeitssensor (10) zur Bestimmung der Restfeuchte (10) vorgesehen ist.

10. Vorrichtung nach Anspruch 8, dadurch **gekennzeichnet,** daß die Band-Lufttrocknungseinrichtung (8) mehrere in Stapelanordnung ausgebildete, einzeln ansteuerbare Bänder zur Aufnahme des Trockengutes enthält, wobei die Bänder gegeneinander versetzt und im definierten Abstand angeordnet sind, und die Warmluftzuführung in den unteren Bereich der Trocknungseinrichtung (8) erfolgt.
